# EUROPÄISCHE PATENTSCHRIFT

(11) **EP 2 213 170 B1**
(45) Veröffentlichungstag und Bekanntmachung des Hinweises auf die Patenterteilung: **19.09.2012**
(21) Anmeldenummer: 10003034.5
(22) Anmeldetag: 05.07.1993
(51) Int. Cl.: A01N 43/82, A01N 33/18, A01P 13/02

(54) **Herbizide Mittel auf Basis von Heteroaryloxyacetamiden**
Herbicidal agents based on heteroaryloxyacetamides
Agents herbicides à base d'heteroaryloxyacetamides

(30) Priorität: 16.07.1992 DE 4223465
(43) Veröffentlichungstag der Anmeldung: 04.08.2010
(62) Teilanmeldung aus: 05024751.9
(73) Patentinhaber: Bayer CropScience AG, 40789 Monheim (DE)
(72) Erfinder: Santel, Hans-Joachim, Dr., 51371 Leverkusen (DE); Feucht, Dieter, Dr., 65760 Eschborn (DE)

(56) Entgegenhaltungen:
- EP-A- 0 155 493
- EP-A- 0 195 237
- EP-A- 0 348 737
- EP-A- 0 427 695
- EP-A1- 0 009 616
- EP-A1- 0 257 771
- EP-A2- 0 290 257
- EP-B- 0 067 713
- CH-A5- 559 507
- DE-A1- 2 950 682
- DE-A1- 3 434 982
- DE-A1- 3 600 997
- JP-A- 61 005 004
- JP-A- 62 048 605
- US-A- 4 530 717
- US-A- 4 840 663
- CHEMICAL PATENTS INDEX, DOCUMENTATION ABSTRACTS JOURNAL Section Ch, Week 9228 9. September 1992 (1992-09-09) Thomson Scientific, London, GB; Class C, AN 92-230512/28 XP002075498, -& JP 4 154706 A (SDS BIOTECH CORP) 27. Mai 1992 (1992-05-27)
- CHEMICAL PATENTS INDEX, DOCUMENTATION ABSTRACTS JOURNAL Section Ch, Week 8910 3. Mai 1989 (1989-05-03) Thomson Scientific, London, GB; Class C, AN 89-073384/10 XP002075499, -& JP 1 026504 A (NIHON TOKUSHU NOYAKU SEI) 27. Januar 1989 (1989-01-27)
- NIHON TOKUSHU NOYAKU SEIZO K.K.: "Herbicidal agents", RESEARCH DISCLOSURE, Nr. 201, Januar 1981 (1981-01), Seiten 9-17, XP002075497, DISCLOSURE NR. 20017, HAVANT,HAMPSHIRE,GB;

## Beschreibung

Die Erfindung betrifft neue herbizide, synergistische Wirkstoffkombinationen, die aus bekannten Heteroaryloxyacetamiden einerseits und weiteren bekannten, zu einer anderen Stoffklasse gehörenden Herbiziden andererseits bestehen und mit besonderem Vorteil zur selektiven Unkrautbekämpfung in verschiedenen Nutzpflanzenkulturen verwendet werden können.

In den nachfolgend genannten Patentschriften werden Heteroaryloxyacetamide beschrieben, die bevorzugt gegen monokotyle Unkräuter (= Ungräser), zusätzlich aber auch gegen einige dikotyle Unkräuter wirken. Sie zeigen praktisch ausschließlich Bodenwirkung und nur geringe Wirkung über das Blatt und besitzen zum Teil eine hohe Selektivität in mono- und dikotylen Kulturpflanzen wie Getreide, Mais, Reis, Soja und Baumwolle [vergl. z.B. EP-A 18 497 (= US-A 4 645 525 und US-A 4 756 741); ; EP-A 94 541 (= US-A 4 585 471); EP-A 348 734 (= US-A 4 988 380); EP-A 348 737 (= US-A 4 968 342 und 5 090 991); und DE-A 4 133 827.

So ist (5-Trifluormethyl-1,3,4-thiadiazol-2-yl-oxy)-essigsäure-N-isopropyl-N-(4-fluorphenyl)-amid der Formel (I-1)
(= Flufenacet) 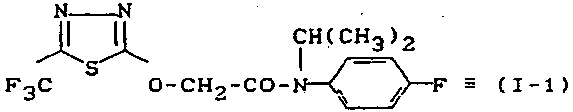 z.B. aus EP-A 348 737 und US-A 4 968 342 bekannt.

In Research Disclosure Nr. 201 (1981), werden auf den Seiten 9-17 unter Disclosure-Nr. 20017 herbizide Mischungen von Benzthiazol- und Benzoxazol- 2-yloxy-acetamiden mit u.a. dem 2,6-Dinitroanilin Trifluralin beschrieben.

DE-A 3 434 982 offenbart Kombinationen der beiden Dinitroaniline Trifluralin und Pendimethalin miteinander und erwähnt als Stand der Technik Mischungen mit anderen Herbiziden wie z.B. mit Isoproturon und Triazinen.

EP-A 257771 beschreibt Kombinationen von 2,6-Dinitroanilinen, wie Trifluralin und Pendimethalin, mit dem Pyridincarboxamid Diflufenican.

Überraschenderweise wurde nun in biologischen Versuchen eine Reihe von bekannten herbiziden Wirkstoffen aus der Stoffklasse der 2,6-Dinitroaniline gefunden, die bei gemeinsamer Anwendung mit den vorgenannten Heteroaryloxyacetamiden ausgesprochen synergistische Eigenschaften hinsichtlich der Effektivität gegen Unkräuter aufweisen und mit besonderem Vorteil, d.h. als breit wirksame Kombinationspräparate, zur selektiven Unkrautbekämpfung - sowohl von monokotylen wie auch von dikotylen Unkräutern, im Vorauflauf- und Nachauflaufverfahren -in monokotylen und dikotylen Nutzpflanzenkulturen, wie beispielsweise Mais, Weizen, Gerste, Reis, Soja, Baumwolle, Rüben und Erdnüsse, verwendet werden können, wobei eine Reihe wirtschaftlich wichtiger (Problem-)Unkräuter und Ungräser sicher bekämpft werden kann.

Gegenstand der vorliegenden Erfindung sind herbizide synergistische Mittel, gekennzeichnet durch einen wirksamen Gehalt an einer Wirkstoffkombination bestehend aus
(1) einem Heteroaryloxyacetamid der allgemeinen Formel (I) 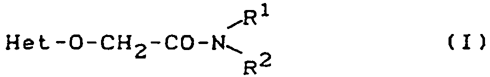 worin
   - Het: für einen gegebenenfalls substituierten 1,3,4-Thiadiazol-2-yl, -Rest
   - R¹: für C₁-C₄-Alkyl,
   - R²: für gegebenenfalls substituiertes Phenyl steht,
   (= Wirkstoffe der Gruppe 1) und
(2) einem bekannten herbiziden Wirkstoff aus der Verbindungsklasse der 2,6-Dinitroaniline, wie z.B. N,N-Di-(n-propyl)-2,6-dinitro-4-trifluormethyl-anilin (TRIFLURALIN) oder N-(1-Ethylpropyl)-3,4-dimethyl-2,6-dinitroanilin (PENDIMETHALIN);
(= Wirkstoffe der Gruppe 2),
wobei in den Wirkstoffkombinationen das Gemichtsverhältnis von Wirkstoff der Gruppe (A) zu dem Wirkstoff der Gruppe (2) zwischen 1:0,01 und 1:100, insbesondere zwischen 1:0,1 und 1:30 liegt.

Die Wirkstoffe der Gruppe (2) sind beschrieben in "The Pesticide Manual", British Crop Protection Council, 8th Edition (1987).

Die unter Gruppe (1) definierten Heteroaryloxyacetamide der Formel (I) wirken bevorzugt gegen monokotyle Unkräuter (= Ungräser), wirken aber auch zusätzlich gegen einige dikotyle Unkräuter.

Die unter Gruppe (2) aufgeführten Wirkstoffe können zur selektiven Bekämpfung eines breiten Spektrums von Unkräutern und Ungräsern in wirtschaftlich wichtigen Kulturen wie z.B. Getreide, Mais, Soja, Baumwolle, Rüben und Reis eingesetzt werden. Jedoch ist ihre Wirkung gegen bestimmte mono- und dikotyle Schadpflanzen nicht immer ausreichend. Wichtige Problemunkräuter wie beispielsweise Galium aparine oder Lolium-Arten werden häufig nur unzureichend erfaßt.

Es wurde nun überraschend gefunden, daß die oben definierten Wirkstoffkombinationen aus den Heteroaryloxyacetamiden der Formel (I) beziehungsweise Gruppe (1) und den unter Gruppe (2) genannten Wirkstoffen eine besonders hohe Wirksamkeit aufweisen und in vielen Kulturen selektiv anwendbar sind.

Überraschenderweise ist die herbizide Wirksamkeit der erfindungsgemäßen Wirkstoffkombination wesentlich höher als die Summe der Wirkungen der einzelnen Wirkstoffe.

Es liegt somit ein nicht vorhersehbarer echter synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter wie Galium aparine und Lolium-Arten gut bekämpfen. Die neuen Wirkstoffkombinationen stellen somit eine wertvolle Bereicherung der Selektivherbizide dar.

Die erfindungsgemäßen Wirkstoffkombinationen können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippä, Rotala, Lindernia, Lamium, Veronica, Abutilon, Emex, Datura, Viola, Galeopsis, Papaver, Centaurea, Trifolium, Ranunculus, Taraxacum.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Auf 1 Gewichtsteil Wirkstoff der Gruppe (1) Formel (I) entfallen 0,01 bis 100 Gewichtsteile und besonders bevorzugt 0,1 bis 30 Gewichtsteile Wirkstoff der Gruppe (2).

Die Wirkstoffe beziehungsweise Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflaufverfahren, kann es ferner vorteilhaft sein, in die Formulierungen als weitere Zusatzstoffe pflanzenverträgliche mineralische oder vegetabilische Öle (z.B. das Handelspräparat "Oleo Dupont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,01 und 10 kg pro ha, vorzugsweise zwischen 0,05 und 5 kg pro ha, besonders bevorzugt zwischen 0,1 und 3,0 kg pro ha.

Die erfindungsgemäßen Wirkstoffkombinationen können vor und nach dem Auflaufen der Pflanzen appliziert werden, also im Vorauflauf und Nachauflauf-Verfahren.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.; "Calculating synergistic and antagonistic responses of herbicide combinations", Weeds 15, Seiten 20 - 22, 1967):

Wenn
- X =: % Schädigung durch Herbizid A (Wirkstoff der Gruppe 1) bei p kg/ha Aufwandmenge und
- Y =: % Schädigung durch Herbizid B (Wirkstoff der Gruppe 2) bei q kg/ha Aufwandmenge und
- E =: die erwartete Schädigung der Herbizide A und B, bei p und q kg/ha Aufwandmenge,
dann ist E = X + Y - (X * Y/100).

Ist die tatsächliche Schädigung größer als berechnet, so ist die Kombination in ihrer Wirkung überadditiv., d.h. sie zeigt einen synergistischen Effekt.

## Patentansprüche

1. Herbizide synergistische Mittel, **gekennzeichnet durch** einen wirksamen Gehalt an einer Wirkstoffkombination bestehend aus
(1) einem Heteroaryloxyacetamid der allgemeinen Formel (I), 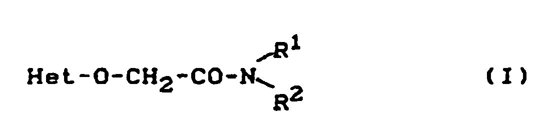 worin
Het für einen gegebenenfalls substituierten 1,3,4-Thiadiazol-2-yl-Rest, steht,
R¹ für C₁-C₄-Alkyl und
R² für gegebenenfalls substituiertes Phenyl steht,
(= Wirkstoffe der Gruppe 1) und
(2) einem bekannten herbiziden Wirkstoff aus der Verbindungsklasse der 2,6-Dinitroaniline, wie z.B. N,N-Di-(n-propyl)-2,6-dinitro-4-trifluormethylanilin (TRIFLURALIN) oder N-(1-Ethylpropyl)-3,4-dimethyl-2,6-dinitroanilin (PENDIMETHALIN),
(= Wirkstoffe der Gruppe 2);
wobei in den Wirkstoffkombinationen das Gewichtsverhältnis von Wirkstoff der Gruppe (1) zu dem Wirkstoff der Gruppe (2) zwischen 1:0,01 und 1:100, insbesondere zwischen 1:0,1 und 1:30 liegt.

2. Verfahren zur Bekämpfung von Unkraut, **dadurch gekennzeichnet, daß** man eine Wirkstoffkombination gemäß Anspruch 1 auf Unkraut oder seinen Lebensraum einwirken läßt.

3. Verwendung von Wirkstoffkombinationen gemäß Anspruch 1 zur Bekämpfung von Unkraut.

4. Verfahren zur Herstellung von herbiziden Mitteln, **dadurch gekennzeichnet, daß** man eine Wirkstoffkombination gemäß Anspruch 1 mit Streckmitteln und/oder oberflächenaktiven Mitteln vermischt.

## Claims

1. Herbicidal synergistic agents, **characterized by** an effective content of an active ingredient combination consisting of
(1)a heteroaryloxyacetamide of the general formula (I) 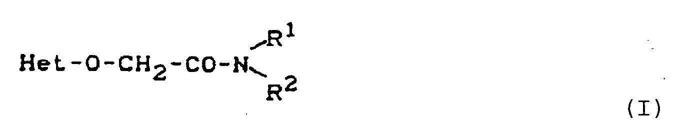 in which
Het represents an optionally substituted 1,3,4-thiadiazol-2-yl radical,
R¹ represents C₁-C₄-alkyl, and
R² represents optionally substituted phenyl,
(= active ingredients of group 1) and
(2)a known herbicidal active ingredient from the compound class of the 2,6-dinitroanilines, such as, for example, N,N-di-(n-propyl)-2,6-dinitro-4-trifluoromethyl-aniline (TRIFLURALIN) or N-(1-ethylpropyl)-3,4-dimethyl-2,6-dinitroaniline (PENDIMETHALIN),
(= active ingredients of group 2);
where, in the active ingredient combinations, the weight ratio of active ingredient of group (1) to the active ingredient of group (2) is between 1 : 0.01 and 1 : 100, in particular between 1 : 0.1 and 1 : 30.

2. Method for combatting weeds, **characterized in that** an active ingredient combination according to Claim 1 is allowed to act on weeds or their habitat.

3. Use of active ingredient combinations according to Claim 1 for combatting weeds.

4. Process for the preparation of herbicidal agents, **characterized in that** an active ingredient combination according to Claim 1 is mixed with extenders and/or surface-active agents.

## Revendications

1. Compositions herbicides synergiques, **caractérisées par** une teneur efficace en une association de substances actives consistant en
(1) un hétéroaryloxyacétamide formule générale (I) 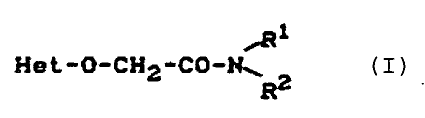 dans laquelle
Het représente un radical 1,3,4-thiadiazol-2-yle, éventuellement substitué,
R¹ représente un groupe alkyle en C₁-C₄ et
R² représente un groupe phényle éventuellement substitué,
(= substances actives du groupe 1) et
(2) une substance active herbicide connue choisie dans la classe de composés des 2,6-dinitroanilines, comme par exemple la N,N-di-(n-propyl)-2,6-dinitro-4-trifluorométhylaniline (TRIFLURALINE) ou la N-(1-éthylpropyl)-3,4-diméthyl-2,6-dinitroaniline (PENDIMÉTHALINE),
(= substances actives du groupe 2),
dans les associations de substances actives le rapport pondéral de la substance active du groupe (1) à la substance active du groupe (2) étant compris entre 1:0,01 et 1:100, en particulier entre 1:0,1 et 1:30.

2. Procédé pour la lutte contre des adventices, **caractérisé en ce qu'**on fait agir sur les adventices ou leur habitat une association de substances actives selon la revendication 1.

3. Utilisation d'associations de substances actives selon la revendication 1, pour la lutte contre des adventices.

4. Procédé pour la fabrication de compositions herbicides, **caractérisé en ce qu'**on mélange une association de substances actives selon la revendication 1 avec des excipients et/ou des agents tensioactifs.
